# EUROPEAN PATENT APPLICATION

(11) **EP 1 553 133 A1**
(43) Date of publication of application: **13.07.2005**
(21) Application number: 04030205.1
(22) Date of filing: 20.12.2004
(51) Int. Cl.: C08K 5/00, C08L 33/06

(54) **Near infrared absorbing acrylic construction blocks**

(30) Priority: 31.12.2003 US 533541 P; 30.11.2004 US 164 P
(71) Applicant: ARKEMA, 92800 Puteaux (FR)
(72) Inventor: Cohen, Leslie A., Langhorne Pennsylvania 19053 (US)

(57) **Abstract**

Acrylic construction blocks in which the faces absorb infrared radiation and transmit visible radiation are disclosed. The faces each comprise an effective amount of an infrared absorber that comprises an infrared absorbing phthalocyanine compound. The blocks may be used in applications in which it is desirable to filter out the infrared radiation passing through the acrylic blocks without materially diminishing the transmission of visible radiation.

## Description

### Field of the Invention

This invention relates to acrylic construction blocks. In particular, this invention relates to acrylic construction blocks in which the faces absorb infrared radiation and transmit visible radiation.

### Background of the Invention

Construction blocks, also known as architectural building blocks, provide an attractive and decorative interior or exterior wall pattern that allows for the passage of light into a building, room, or workspace. Although other shapes are possible, these blocks are typically rectangular blocks having a pair of translucent or transparent faces, or windows, joined by four sides, which form a hollow body.

Acrylic construction blocks are widely used in homes and commercial buildings. These blocks are 75% lighter than glass blocks, eliminating the expensive support framing and anchoring that is required by glass blocks. Thus, the builder is free of the limited shapes and size restrictions of glass blocks, especially in upstairs and cathedral ceiling applications, where support framing becomes complex and expensive. In addition, acrylic resins can be molded into the desired shapes and have excellent strength, transparency and weatherability, which makes them desirable as building materials.

However, acrylic resins also have a high transmittance for the infrared radiation in sunlight, so that the temperature of the space on the other side of the block, *i.e.,* the side of the block away from the sun, increases. In some cases, such as for example ceiling applications, it is desirable to filter out the infrared radiation passing through the acrylic construction blocks without materially diminishing the transmission of visible radiation. Thus, the block remains translucent or transparent and continues to pass visible radiation, but the space on the other side of the block is not heated by the solar infrared radiation.

Radiant energy from the sun is frequently grouped into three regions, the near ultraviolet, the visible, and the near infrared. Together these regions cover the wavelengths from about 290 nm to about 5,000 nm. The near ultraviolet is generally considered to include the region from about 300 nm to about 400 nm; the visible, i.e. "white light", the region of about 400 nm to about 700 nm, and the near infrared, the region of about 700 nm to about 5,000 nm. About 53% of the solar radiation that reaches the earth's surface is in the near infrared region, and about two thirds of this infrared radiation is in the 700 nm to 1300 nm range. Thus, a need exists for an acrylic construction block that will absorb infrared radiation, especially infrared radiation in the 700 nm to 1300 nm range, without substantially affecting the transmission of visible radiation into a building, room, or workspace on the other side of the block.

### Summary of the Invention

The invention is an acrylic construction block comprising a body having a pair of faces joined by a plurality of side edges normal to the faces, each face and side edge having an inner surface and an outer surface, the faces and edge sides defining an interior chamber; in which each of the faces comprises an acrylic resin and an effective amount of an infrared absorber; and the infrared absorber comprises an infrared absorbing phthalocyanine compound represented by Structure I, below. In one aspect, at least 4 of Z¹ to Z¹⁶ are fluorine. In another aspect, M is VO, four to eight of Z¹ to Z¹⁶ are C₆H₅NH, and the remaining eight to twelve of Z¹ to Z¹⁶ are fluorine. In yet another aspect, there are four side edges and each of the faces is square.

### Detailed Description of the Invention

### Acrylic Construction Blocks

An acrylic construction block is comprised of a body having a pair of faces joined by a plurality of side edges. The edge sides are normal to faces. Each of the edge sides and faces has an inner surface and an outer surface. Together the faces and edge sides define an interior chamber. Construction blocks are typically, but not necessarily, rectangular blocks comprising a pair of faces joined by four sides. More typically the four sides are equal and each face is square. However, an acrylic construction block can be constructed in a shape other than a square, for example, rectangular; in a shape having other than one having four sides, for example, hexagonal; or in a shape with one or more curved sides.

Typically, the acrylic construction block is molded from an acrylic resin as two hollow halves, more typically two identical hollow halves, which are permanently welded together to form a seam. The resulting block is a completely enclosed unit having a hollow interior or chamber. Although there is no limitation on the size or shape in which the acrylic construction blocks of the invention may be manufactured, square construction blocks are commercially available in various sizes, for example, 6 inches, 8 inches, or 9 inches on a side and may have a thickness of, for example about 2 inches or about 3 inches. Blocks with three straight sides and one curved side are also produced. The faces typically have thickness of about 1/8 inch (about 0.125 inch, 3.2 mm) to about 3/8 inch (about 0.375 inch, 9.5 mm), for example about 0.165 inch (4.2 mm).

Acrylic construction blocks are transparent or translucent and may have a texture pattern on the one or both faces. Translucent blocks transmit white light, but maintain privacy. The outer surface of the blocks may be smooth or may have an appropriate mechanism for joining the block to other blocks. Acrylic construction blocks are disclosed, for example, in Carlson, U.S. Pat. No. 4,891,925; Kline, U.S. Pats. No. 5,033,245 and 5,038,542; Regina, U.S. Pat. No. 5,836,125; and Fisher, U.S. Pat. Nos. 5,778,620, 6,260,317, and 6,393,790; all the disclosures of which are all incorporated herein by reference.

The blocks comprise an acrylic resin, that is a thermoplastic synthetic polymer or copolymer prepared by polymerization or copolymerization of an acrylic acid, methacrylic acid, or ester thereof, such as, for example methyl methacrylate, methyl acrylate, ethyl methacrylate, ethyl acrylate, butyl methacrylate, and/or butyl acrylate. Typically, the acrylic resin used in acrylic construction blocks is produced primarily or entirely from methyl methacrylate. These resins are well known to those skilled in the art and are commercially available from, for example, Atrofina Chemicals, Philadelphia, PA, USA, under the name of PLEXIGLAS® acrylic resins. Useful PLEXIGLAS® acrylic resins include, for example, acrylic resins MI-7, HFI-7, SG-10, SG-7, DR-101, and HFI-10-101. These acrylic resins have high impact resistance and excellent optical properties. A 3.2 mm thick (0.125 inch) sample of PLEXIGLAS® MI-7 acrylic resin, for example, has a tensile strength at maximum of 7,000 psi (482.6 bar), as measured by ASTM method D638, and a luminous transmittance of about 91% and a haze of less than 2%, as measured by ASTM method D1003. PLEXIGLAS® Frosted acrylic resin, which may be used to form blocks that are translucent, but not transparent, has a tensile strength at maximum of 7,600 psi (524.0 bar), a luminous transmittance of about 84%, and a haze of 98%, as measured by the methods given above.

### Infrared Absorbing Compounds

Each of the faces of the construction block comprises an effective amount of an absorber that reduces the amount of infrared radiation, especially infrared radiation in the 700 nm to 1300 nm range, passing through the block but transmits a large portion of the visible radiation ("white light"). The absorber comprises an infrared absorbing phthalocyanine compound represented by Structure 1: 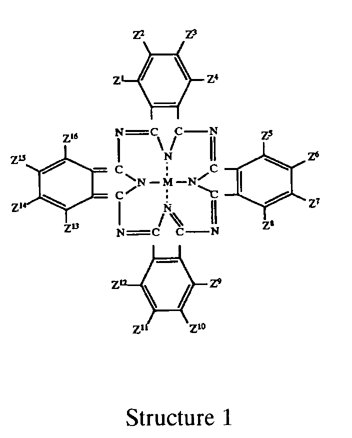 in which Z¹ to Z¹⁶ each independently represent SR¹, OR², a hydrogen atom, a halogen atom, or NHY where Y independently represents a phenyl group which may have one or more substituents selected from the group consisting of 1 to 3 alkyl groups having 1 to 4 carbon atoms, 1 to 2 alkoxy groups having 1 to 4 carbon atoms, 1 to 2 alkoxycarbonyl groups having 1 to 8 carbon atoms, and 1 to 5 halogen atoms, or an alkyl group having 1 to 8 carbon atoms; R¹ and R² independently represent a phenyl group which may have one or more substituents selected from the group consisting of 1 to 3 alkyl groups having 1 to 4 carbon atoms, 1 or 2 alkoxy groups having 1 to 4 carbon atoms, 1 or 2 alkoxycarbonyl group having 1 to 4 carbon atoms, 1 or 2 alkoxycarbonyl group having 1 to 8 carbon atoms and 1 to 5 halogen atoms or an alkyl group having 1 to 20 carbon atoms; and M represents metal, metal oxide, metal halide or two hydrogen atoms; provided that at least one of Z¹ to Z¹⁶ is NHY.

These compounds have a high transmittance in the visible region of the spectrum but absorb radiation in the near infrared region of the spectrum. These compounds are disclosed in Kaieda, U.S. Pat. No. 5,712,332; Masuda, U.S. Pat. No. 6,069,244; and Masuda, U.S. Pat. Publication No. 2003/0234995 A1. The disclosure of each of these patents and patent publications is incorporated herein by reference.

Alkyl groups having 1 to 8 carbon atoms include, for example, methyl, ethyl, *n*-propyl, *i*-propyl, *n*-butyl, *i*-butyl, *t*-butyl, and linear and branched pentyl, hexyl, cyclohexyl, heptyl, and octyl. Alkyl groups having 1 to 20 carbon atoms additionally include, for example, linear and branched decyl, dodecyl, undecyl, tridecyl, tetradecyl, pentadecyl, hexadecyl, heptadecyl, octadecyl, nonadecyl, and eicosyl. Halogens include chlorine, fluorine, bromine, and iodine.

Substituted phenyl includes, for example, phenyl substituted with 1 to 3 alkyl groups having 1 to 4 carbon atoms, phenyl substituted with 1 to 2 alkoxy groups having 1 to 4 carbon atoms, phenyl having one or two alkoxycarbonyl groups which have 1 to 8 carbon atoms, and phenyl group substituted with 1 to 5 halogen atoms.

M is, for example, a metal such as copper, zinc, cobalt, nickel, iron, vanadium, titanium, indium, tin, palladium, or aluminum; a metal oxide such as vanadyl (VO), or titanyl (TiO); a metal halide such as chloroindium or dichlorotin; or two hydrogen atoms. Preferably, M is copper, zinc, cobalt, nickel, iron, vanadyl, titanyl, chloroindium or dichlorotin, and particularly preferable are copper, zinc, cobalt, vanadyl and dichlorotin, which provide good light resistance. Vanadyl compounds have high heat absorbing ability are more preferred.

NHY is a phenylamino group or alkylamino group, which may have a substituent. At least one, preferably more than 4, more preferably more than 6 of Z¹ to Z¹⁶ are NHY, and into the remaining Z¹ to Z¹⁶ substituents are selected from the group consisting of: phenylthio and alkylthio groups, which may have a substituent, represented by SR¹; phenyloxy and alkyloxy groups, which may have a substituent, represented by OR²; hydrogen; and halogen. Typical substituents include, for example, methyl, methoxy, ethoxy, and halogen.

As the number of NHY substituents increases, the infrared absorption of the infrared absorbing phthalocyanine compound increases. Therefore a larger number of NHY groups is preferred. In addition, compounds in which the NHY is an anylino group are especially preferable because both light resistance and heat resistance are high. Even more preferably, in the phthalocyanine compound, at least one, preferably more than 4, more preferably more than 6 of Z¹ to Z¹⁶ are NHY, and the total number of the substituents NHY, SR¹, SR² and halogen atom is 9 or more. These phthalocyanine compounds have high compatibility with resins. Still more preferably, in the phthalocyanine compounds, at least 4, preferably more than 6 of Z², Z³, Z⁶, Z⁷, Z¹⁰, Z¹¹, Z¹⁴ and Z¹⁵ are NHY. These phthalocyanine compounds have better light resistance.

Especially preferred are infrared absorbing phthalocyanine compounds in which at least 4 substituents are fluorine (-F). These compounds have high heat radiation-absorbing ability, light resistance, heat resistance and compatibility with acrylic resins as well as easy production.

A preferred infrared absorbing phthalocyanine compound is EXCOLOR® 803K infrared absorbing compound, a toluene-soluble phthalocyanine infrared absorbing compound that has an absorption maximum at about 850 nm, available from Nippon Shokubai Co, Osaka, Japan. This compound is a fluorine containing infrared absorbing phthalocyanine compound as described in Masuda, U.S. Pat. Publication No. 2003/0234995 A1, paragraph [0112], and JP-A-2002-822193, the disclosures of which are incorporated herein by reference. EXCOLOR® 803K (CAS N° 189326-16-7) is believed to have the structure shown in Structure 2 (Cdp1, below). In this structure, M is VO, four to eight of Z¹ to Z¹⁶ are C₆H₅NH, and the remaining eight to twelve of Z¹ to Z¹⁶ are fluorine.

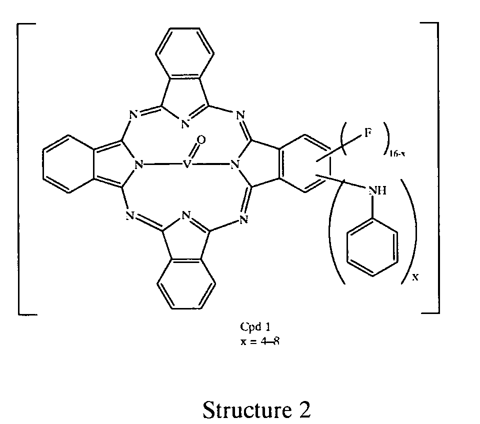

The infrared absorbing phthalocyanine compound, or compounds, may be incorporated into the acrylic resin by melt extrusion. Equipment and conditions for the melt extrusion of acrylic resins are well known to those skilled in the art and may be found, for example, on the website of Atofina Chemicals (atofinachemicals dot com). For example, the infrared absorbing phthalocyanine compound and the acrylic resin may be mixed together and extruded, typically at a temperature of about to about 230°C to about 260°C. A useful acrylic resin is PLEXIGLAS® MI-7 acrylic resin (Atofina Chemicals, Philadelphia, PA, USA). There is no apparent color change in the resulting acrylic resin and no particles of the infrared absorbing phthalocyanine compound are visible in the acrylic resin.

The infrared absorber may be added to the acrylic resin using a master batch, that is small amount of acrylic resin that contains a high level of the infrared absorber. A measured amount of the master batch is added to the bulk of the acrylic resin. This method allows the desired amount of infrared absorber to be accurately added to the bulk of the acrylic resin.

The resulting acrylic resin may be molded into an acrylic construction block using methods well known to those skilled in the art. As described above, typically, the acrylic construction block is molded from the acrylic resin, which comprises an effective amount of the infrared absorber, as two hollow halves, more typically two identical hollow halves, which are permanently welded together to form a seam.

Each of the faces of the acrylic construction block comprises an effective amount of the infrared absorber. This amount is the amount effective to substantially reduce the amount of infrared radiation passing through the construction block so that the region on the side of the block away from the source of infrared radiation is not substantially heated by the infrared radiation, but to transmit a large portion of the visible radiation. As is well known to those skilled in the art, the concentration of an absorber required to produce a particular optical density at a particular wavelength can be determined from the thickness of the material in which the absorber is present and the extinction coefficient of the absorber at the desired wavelength using Beer's law. Preferably, the amount is effective to produce a minimum of 0.4% solar heat gain coefficient for a single face (about 0.165 inch thick, 4.2 mm) and yet maintain a high level of visible light transmission.

The absorber may be a single infrared absorbing phthalocyanine compound or it may be a mixture of two or more infrared absorbing phthalocyanine compounds. A mixture of two or more infrared absorbing phthalocyanine compounds, each having a different absorption maximum, may be used, for example, to enhance absorption of the infrared radiation without increasing the absorption of the visible radiation. In addition, the absorber may comprise one or more infrared absorbing phthalocyanine compounds and one or more infrared absorbers that are not phthalocyanine compounds. For example, the absorber may be a mixture of an infrared absorbing phthalocyanine compound such as EXCOLOR® 803K and carbon black. This mixture may be used to absorb infrared radiation, maintain high transmittance of visible radiation, and reduce cost.

### INDUSTRIAL APPLICABILITY

The infrared absorbing construction blocks of the invention may be used for any application in which it is desirable to pass visible radiation ("white light") but in which it is undesirable to pass infrared radiation and the heat generated by the absorption of the infrared radiation so that the space on the side of the block opposite the source of visible and infrared radiation, typically the sun, is illuminated by the visible radiation but not heated by the infrared radiation. When sunlight containing visible and infrared radiation strikes the infrared absorbing construction blocks of the invention, most of the infrared radiation is absorbed by the face of the block that faces the sun. This face will heat up due to the absorption of infrared radiation. However, the heat will not be passed to the space on the other side of the block because of the insulating effect of the hollow, typically air-filled, chamber between the two faces and the insulating effect of the other face of the block. Acrylic polymers have low thermal conductivity, so heat is not readily transmitted from the interior of the block to the space on the side of the block away from the sun. Typical applications include, for example, windows, exterior doors such as patio doors, skylights, and ceilings in residences and office buildings.

### Examples

### Examples 1-7:

Samples are made by compounding the additive mix, into an acrylic resin. Plexiglas V826NA® (no additive) with stearyl alcohol, Tinuvin P, and from 0 - 100 ppm NIR absorber -EXCOLOR 803K) in examples 1-3. Plexiglas® VMHF (NA) (no additive) with stearic acid, Tinuvin P, and from 0 - 100 ppm NIR absorber -EXCOLOR 803K), in examples 4-7. The samples were then extruded on an American Leistritz twin screw extruder at 220 °C. The pellet samples were then injection molded on an Arburg Injection Molding machine at 230 °C, 500 psi (34,5 bar) with a 300 psi back pressure (20,7 bar) and a mold temperature of 140 °F (60°C) to 1/8" x 2.5" x 3.0" plaque. All measurements were conducted on the injection molded plaques.

Formulations are given in Table 1, with measured properties in Table 2

**TABLE 1**

| Formulations (in grams): | | | | | | | |
|---|---|---|---|---|---|---|---|
| **Example** | **EXCOLOR 803K amount** | **V826NA** | **VMHFNA** | **Stearyl alcohol** | **Stearic acid** | **Tinuvin P** | **EXCOLOR 803K** |
| | | | | | | | |
| 1 control | 0 | 800 | - | 2.0 | - | 0.06 | |
| 2 | 50 ppm | 800 | - | 2.0 | - | 0.06 | 0.04 |
| 3 | 100 ppm | 800 | - | 2.0 | - | 0.06 | 0.08 |
| 4 control | 0 | - | 800 | - | 5.6 | 0.06 | |
| 5 | 50 ppm | - | 800 | - | 5.6 | 0.06 | 0.04 |
| 6 | 100 ppm | - | 800 | - | 5.6 | 0.06 | 0.08 |
| 7 control | 0 | - | 800 | - | 5.6 | 0.06 | |

**TABLE 2**

| **Example** | **TWLT** | **Haze** | **Solar Energy Transmittance** | **Shading Coefficient** |
|---|---|---|---|---|
| | | | | |
| 1 | 93.73 | 0.837 | 87.6 | 0.74 |
| 2 | 60.10 | 0.719 | 52.5 | 0.44 |
| 3 | 38.15 | 0.456 | 34.67 | 0.29 |
| 4 | 91.48 | 0.801 | 85.5 | 0.72 |
| 5 | 57.76 | 0.789 | 50.2 | 0.42 |
| 6 | 43.95 | 0.758 | 39.1 | 0.33 |
| 7 | 91.69 | 0.736 | 85.0 | 0.72 |

- Solar Energy Transmittance weighted ordinate calculation
   Appendix: 1967 Handbook of fundamentals
- Shading coefficient is calculated for Ashrae standard simple strength summer conditions for vertical glazing
- TWLT is measured on an injection molded plaque by a Hunterlab colorimeter-D25 model, ASTM: E1331 and E1164.
- Haze is measured on an injection molded plaque on a BYK Gardner Spectrophotometer using ASTM D1003 or ASTM D2805-80

### Examples 8-11

• The EXCOLOR 803K and Carbon black additives were pre-blended and then physically mixed with PLEXIGLAS MI-7 impact modified resin, as in Examples 1-7. The pre-blended polymer/additive mix was fed into the feeder of a Killion extruder.
• Polymer pellets were injection molded as plaques for testing.
Formulations and test results are given in TABLE 3

**TABLE 3**

| Formulations (in grams) | | | | | | |
|---|---|---|---|---|---|---|
| **Example** | **EXCOLOR 803K amount** | **PLEXIGLAS MI7** | **EXCOLOR** | **Carbon Black** | **TWLT** | **Solar Heat Gain Coefficient** |
| 8 (control) | 0 | 1000.00 | - | - | 91 | - |
| 9 | 12 ppm | 999.953 | 0.012 | 0.035 | 56 | 0.51 |
| 10 | 9 ppm | 999.964 | 0.009 | 0.027 | 63 | 0.55 |
| 11 | 24 ppm | 999.969 | 0.024 | 0.007 | 34 | 0.39 |

Solar Energy Transmittance weighted ordinate calculation
Appendix: 1967 Handbook of fundamentals

Shading coefficient is calculated for ASHRAE standard simple strength summer conditions for vertical glazing. The fraction of energy absorbed is converted to a solar heat gain coefficient using Window5 and measurements from a Perkin-Elmer Lambda 9 spectrophotometer.

Having described the invention, we now claim the following and their equivalents.

## Claims

1. An acrylic construction block comprising a body having a pair of faces joined by a plurality of side edges normal to the faces, each face and side edge having an inner surface and an outer surface, the faces and edge sides defining an interior chamber; 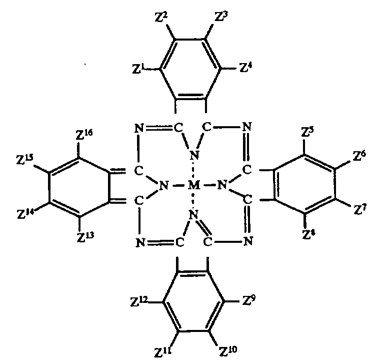 in which each of the faces comprises an acrylic resin and an effective amount of an infrared absorber; and the infrared absorber comprises an infrared absorbing phthalocyanine compound represented by the following structure:
in which Z¹ to Z¹⁶ each independently represent SR¹, OR², a hydrogen atom, a halogen atom, or NHY where Y independently represents a phenyl group which may have one or more substituents selected from the group consisting of 1 to 3 alkyl groups having 1 to 4 carbon atoms, 1 to 2 alkoxy groups having 1 to 4 carbon atoms, 1 to 2 alkoxycarbonyl groups having 1 to 8 carbon atoms, and 1 to 5 halogen atoms, or an alkyl group having 1 to 8 carbon atoms; R¹ and R² independently represent a phenyl group which may have one or more substituents selected from the group consisting of 1 to 3 alkyl groups having 1 to 4 carbon atoms, 1 or 2 alkoxy groups having 1 to 4 carbon atoms, 1 or 2 alkoxycarbonyl group having 1 to 4 carbon atoms, 1 or 2 alkoxycarbonyl group having 1 to 8 carbon atoms and 1 to 5 halogen atoms or an alkyl group having 1 to 20 carbon atoms; and M represents metal, metal oxide, metal halide or two hydrogen atoms; provided that at least one of Z¹ to Z¹⁶ is NHY.

2. The acrylic construction block of claim 1 in which at least four of Z¹ to Z¹⁶ are fluorine.

3. The acrylic construction block of claim 1 in which M is VO, four to eight of Z¹ to Z¹⁶ are C₆H₅NH, and the remaining eight to twelve of Z¹ to Z¹⁶ are fluorine.

4. The acrylic construction block of claim 1 in which the infrared absorbing phthalocyanine compound is CAS N° 189326-16-7.

5. The acrylic construction block of claim 1 in which there are four side edges and each of the faces is square.

6. The acrylic construction block of claim 1 in which the infrared absorber additionally comprises carbon black.
